(19) 

Europäisches Patentamt

European Patent Office

Office européen des brevets

(11) **EP 3 250 657 B1**

(12) **EUROPEAN PATENT SPECIFICATION**

(45) Date of publication and mention of the grant of the patent:
**21.06.2023 Bulletin 2023/25**

(21) Application number: **16743773.0**

(22) Date of filing: **25.01.2016**

(51) International Patent Classification (IPC):
**C09K 8/32** $^{(2006.01)}$        **C09K 8/48** $^{(2006.01)}$

(52) Cooperative Patent Classification (CPC):
**C09K 8/03;** C09K 2208/10

(86) International application number:
**PCT/NO2016/050008**

(87) International publication number:
**WO 2016/122328 (04.08.2016 Gazette 2016/31)**

(54) **POTASSIUM FORMATE-BASED SLURRY FOR OIL WELL DRILLING FLUIDS**

KALIUMFORMATBASIERTE AUFSCHLÄMMUNG FÜR ÖLBOHRFLÜSSIGKEITEN

SUSPENSION À BASE DE FORMIATE DE POTASSIUM POUR FLUIDES DE FORAGE DE PUITS DE PÉTROLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.01.2015 NO 20150115**

(43) Date of publication of application:
**06.12.2017 Bulletin 2017/49**

(73) Proprietor: **ELKEM ASA**
**0277 Oslo (NO)**

(72) Inventor: **AL-BAGOURY, Mohamed**
**4616 Kristiansand S (NO)**

(74) Representative: **Zacco Norway AS**
**P.O. Box 488 Skøyen**
**0213 Oslo (NO)**

(56) References cited:
**WO-A1-2012/036560        WO-A1-2014/047088**
**CN-A- 101 851 492        CN-A- 103 555 301**
**US-A1- 2011 247 986        US-A1- 2013 324 443**

- **. SVENDSEN ET AL: "Use of a Novel Drill-In/Completion Fluid Based on Potassium Formate Brine on the First Open Hole Completion in the Gullfaks Field", SPE/IADC 29409, 1 January 1995 (1995-01-01), pages 647-661, XP055484156,**

- **Abdullah M Al Moajil ET AL: "Formation Damage Caused by Improper Mn 3 O 4 -Based Filter-Cake-Cleanup Treatments", SPE, 1 January 2013 (2013-01-01), pages 64-74, XP055484157, Retrieved from the Internet: URL:https://www.onepetro.org/download/jour nal-paper/SPE-144179-PA?id=journal-paper/S PE-144179-PA [retrieved on 2018-06-13]**

- **AL-BAGOURY, M ET AL.: 'Potassium Formate / Manganese Tetraoxide Fluid for Ultra HPHT Drilling''.' 2014 AADE FLUIDS TECHNICAL CONFERENCE AND EXHIBITION HELD AT THE HILTON HOUSTON NORTH HOTEL HOUSTON, TEXAS, pages 1 - 13, XP009505436**

- **MOHAMED AL-BAGOURY ET AL: "AADE-14-FTCE-44 Potassium Formate / Manganese Tetraoxide Fluid for Ultra HPHT Drilling", 2014 AADE FLUIDS TECHNICAL CONFERENCE AND EXHIBITION HELD AT THE HILTON HOUSTON NORTH HOTEL, HOUSTON, TEXAS, USA; APRIL 15-16, 2014, AMERICAN ASSOCIATION OF DRILLING ENGINEERS, US , no. AADE-14-FTCE-44 1 January 2014 (2014-01-01), pages 1-13, XP009505436, Retrieved from the Internet: URL:http://www.aade.org/app/download/72380 01525/AADE-14-FTCE-44.pdf**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**(Cont. next page)**

- **Yusuf Kar ET AL: "Environmentally Friendly Dispersants for HP/HT Aqueous Drilling Fluids Containing Mn 3 O 4 , Contaminated With Cement, Rock Salt, and Clay", , 28 September 2011 (2011-09-28), XP055697860, Retrieved from the Internet: URL:https://www.onepetro.org/download/conference-paper/SPE-141957-MS?id=conference-paper/SPE-141957-MS [retrieved on 2020-05-25]**
- **L.L YAN ET AL: "Study on Erosive and Magnetic Effects of Weighting Agent in a High Density Water-Based Drilling Fluid", SPE, 1 January 2014 (2014-01-01), XP055484159, DOI: 10.4043/24787-MS ISBN: 978-1-61399-312-5**
- **Gallino Et.Al.: "New formulations of potassium acetate and potassium formate polymer muds greatly improved drilling and waste disposal operations in south italy", SPE 37471, 1 January 1997 (1997-01-01), pages 9-11, XP055484163, Retrieved from the Internet: URL:https://www.onepetro.org/download/conference-paper/SPE-37471-MS?id=conference-paper/SPE-37471-MS [retrieved on 2018-06-13]**

Remarks:
The file contains technical information submitted after the application was filed and not included in this specification

## Description

### Technical Field

The present invention relates to a high density potassium formate brine based slurries containing manganomanganic oxide particles and/or ilmenite particles and to a method for the production of such slurries. The invention further relates to drilling fluids compositions containing such slurries.

### Background Art

US Patent No. 5,007,480 discloses drilling mud and oil well cement slurries for different purposes such as well cementing, completion fluids, packer fluids, drilling fluids, isolation fluids and other related fluids containing manganomanganic oxide particles as a weight agent. The particle size of the manganomanganic oxide particles is generally below 10 microns with an average particle diameter less than 1 micron.

One drawback with the use of the manganomanganic oxide particles disclosed in US Patent No. 5,007,480 is the poor flow characteristics of the dry particles. Both for offshore and on-shore use of the manganomanganic oxide particles, it would be convenient to use silos for handling and storing the material. However, due to the poor flow characteristics of the material, it is difficult to discharge the material from silo-trucks, silos of delivery boats or stationary silos because the fine particles tend to form bridges in silos and handling systems, particularly in the presence of moisture.

For the same reasons, clearly, metering and feeding of the material into drilling mud and oil well cement slurries from a silo of any size by the use of screw conveyors or vibrating devices is inaccurate and unreliable, or sometimes even impossible.

The manganomanganic oxide particles lose their flowability after handling and may no longer flow freely after being stored at a site, even for a short time. This may require substantial human effort to remove material from a blocked silo, unless the silo is specially designed and fully equipped with special and expensive devices to handle sticky materials. In some instances, the material may therefore also be difficult to move over longer distances using pneumatic transport systems, as are commonly used in the industry.

Material handled in big bags shows a similar lack of flowability, and emptying a big bag through a bottom spout might become impossible with the result that the whole bottom of the bag might need to be cut away to get the material out.

In WO2012036560 it is disclosed a stable, non-settling water-based slurry of manganomanganic oxide particles having a particle size below 10 $\mu$m. The slurry comprises water and up to 92 wt% manganomanganic oxide particles based on the weight of the slurry, and has a pH between 9 and 11 and contains 0.05 to 0.5 wt% of a dispersant based on the weight of dry manganomanganic oxide particle selected from an ethoxylated polycarboxylate and a polyacrylic acid salt, the dispersant having a molecular weight between 500 and 50 000 g/mol. This slurry is being used for water-based oil well drilling fluids.

Under severe drilling conditions such as high temperatures and pressure etc. oil-based or non-aqueous drilling fluids are being widely used by the industry due to its versatile stability under such severe drilling conditions. Oil-based drilling fluids have high penetration rate compared to aqueous drilling fluids and it is suitable when drilling clay-containing formations. Having said that, there is a need to replace oil-based drilling fluids with more environmentally friendly ones. The main disadvantages of the oil-based drilling fluids are; 1) they are harmful to the human and the environment since most of the chemicals used to formulate the compositions are toxic, 2) they are costly due to high disposal cost, and 3) sometimes they cause formation damage to the hydrocarbon bearing formation. So developing a drilling fluid that perform as good as oil-based fluids, but with better HSE profile is of great interest. Solid-free salt brines such as $CaBr_2$, $CaCl_2$, $ZnBr_2$. potassium formate (KFo) and cesium formate (CsFo) have successfully been used as completion fluids.

K and Cs formate brines, with a maximum density of 1297.1 kg/m$^3$ (13 ppg) and 1915.7 kg/m$^3$ (19.2 ppg), respectively, are widely used as fluids for drill-in and completion applications since its introduction in the early 90's. Cs formate brine is regarded as an excellent, but very expensive fluid and its supply is limited. Therefore, there is a growing need for an alternative.

To increase the density of KFo above its saturation density (1297.1 kg/m$^3$ (13 ppg)) requires a combination of K/Cs formate brines or to weight up KFo brine with solid weight material such as $Mn_3O_4$ particles and/or ilmenite particles The use of $Mn_3O_4$ particles and/or ilmenite particles and KFo brine together as drilling and completion fluid to drill oil and gas well are known from (AADE-14-FTCE-44 Al-Bagoury and Steele, 2014 AADE Fluids Technical Conference and Exhibition, Houston, Texas, April 15-16, 2014). This kind of KFo brine based drilling and completion fluids are unique since it offers many advantages such as excellent thermal stability, non-damaging nature to the oil-bearing formation, environmentally friendly fluid, and inhibitive property. Additionally it is an economically competitive system to drill challenging wells.

The common practice today for mixing this system/fluid includes the dry handling of $Mn_3O_4$ particles or ilmenite particles and the need to mix both Mn3O4 or ilmenite and KFo brine with other chemicals either in mud plants onshore or on the offshore rig. It would be logistically preferable to have the two chemicals $Mn_3O_4$ and KFo brine as ready mixed stable slurry. That makes the entire logistic handling much easier and efficient. Additionally that will make the fluid mixing process simpler! easier than the today method. Also handling liquid products normally is preferably than the dry one.

The manganomanganic oxide particles comprise at least 90 % by weight of manganomanganic oxide ($Mn_3O_4$), the reminder being iron oxide, calcium oxide, magnesium oxide and preferably less than 1 % by weight of elemental manganese. The density of the manganomanganic oxide particles is between 4.7 and 4.9 g/cm$^3$ and they have a particle size of at least 98 % below 10 $\mu$m.

Ilmenite is a naturally occurring hard mineral with huge reserves. Ilmenite ($FeTiO_3$) was first used in drilling fluids in the late 70's in the North Sea area (Haaland et al. 1976, Fjogstad A. et al. 2000, Saasen A. et al. 2001, Blomberg N. et al. 2004). Recently Al-Bagoury & Steele have developed micronized ilmenite with an average particle size of 5$\mu$m for the use a non-sagging and non-damaging weight material (Al-Bagoury and Steele, WO2013009187 A1 patent). The main crystalline phase is ilmenite (FeO, MgO)$TiO_2$ with a weight % of about 94. Ilmenite contains 3-4wt.-% MgO that does not exist as a single phase but is incorporated into the ilmenite crystalline structure. Ilmenite has an average density of 4.6-4.7SG. Ilmenite is insoluble in potassium formate and that makes ilmenite suitable material to weight KFo brine. The high solubility of ilmenite in most of inorganic and organic acids makes it easy to remove from the wellbore.

There is thus a need to provide a stable slurry of KFo brine and manganomanganic oxide particles or ilmenite particles which can be stored for a longer period of time and which can be easily converted to a drilling fluid by addition of additional ingredients.

## Description of the invention

It is an object of the present invention to provide a stable KFo brine based slurry containing manganomanganic oxide particles or ilmenite particles which slurry can be used as a basis for making KFo-based drilling fluids.

The present invention thus relates to a stable non-settling slurry of KFo brines and manganomanganic oxide particles having a particle size below 10 $\mu$m and/or ilmenite particles having an average particle size below 15 $\mu$m wherein the slurry contains 0.05 to 0.5 wt% of a salt tolerant dispersant based on the weight of dry manganomanganic oxide particles and/or the ilmenite particles, the dispersant being selected from the group of co- or tri-polymers of acrylic acid and sulfonated monomers in acidic form or in salt form said dispersant having an average molecular weight of less than 20000 g/mol.

The content of dispersant is preferably between 0.07 and 0.15 wt% based on the weight of the manganomanganic oxide particles and/or the ilmenite particles.

To avoid solid settling of the slurry according to the present invention the slurry preferably additionally contains sepiolite or nano-fibrillated cellulose as viscosifier. Both viscosifiers are compatible with KFo brine and they have a high thermal stability.

The use of the KFo brine slurry containing manganomanganic oxide particles and/or ilmenite particles according to the invention, with its chemical and physical properties, enables production of KFo brine drilling fluids with high density.

Manganomanganic oxide fume has an isoelectric point around pH 6, i.e., manganomanganic oxide has a zero zeta potential around pH 6. Therefore, the surface of manganomanganic oxide at pH 6 is neutral and above that pH, the surface will have a negative charge due to the accumulation and the ionization of the hydroxyl group on the surface of the $Mn_3O_4$. Below pH 6, the surface becomes positively charged due to the accumulation of the hydronium ion ($H_3O^+$) on the surface of the particles.

The isoelectric point of manganomanganic oxide may vary slightly depending on the processing circumstances of the ferromanganese production, such as the mode of furnace operation and the quality of the raw materials.

Table 1: Typical chemical composition of $Mn_3O_4$ fume estimated by XRF method

| Component | Content in (%) wt |
|---|---|
| [Mn] | 69,25 |
| [$Mn_3O_4$] | 96,12 |
| [$Fe_2O_3$] | 2,75 |
| [$SiO_2$] | 0,027 |
| [PbO] | 0,07 |
| [ZnO] | 0,1 |
| [$Al_2O_3$] | 0,004 |

(continued)

| Component | Content in (%) wt |
|---|---|
| [CaO] | 0,007 |
| [MgO] | 0,21 |
| [$K_2O$] | 0,005 |
| [$P_2O_5$] | 0,077 |
| [$As_2O_3$] | 0,003 |
| [$Na_2O$] | 0,02 |
| [$SO_3$] | 0,016 |
| [CoO] | 0,01 |
| [BaO] | 0,002 |
| Sp. gravity (kg/dm$^3$) | 4,82 |
| Sp. surface (m$^2$/g) | 2,8 |

A typical chemical composition of $Mn_3O_4$ fume measured by XRF method is shown in Table 1. $Mn_3O_4$ fume contains to a varied extent some metal oxide impurities such as $Fe_2O_3$, ZnO, $Al_2O_3$, MgO, and $SiO_2$ etc. The pH of $Mn_3O_4$ fume varies in the range from 6 to 12, depending on the metal oxides content. Manganomanganic oxide fume exhibits a low charge density as measured by the zeta potential compared to other metal oxides such as silica. This makes the slurrification of manganomanganic oxide much easier than other metal oxides. Manganomanganic oxide slurry shows better long term stability due to the low particle-particle interaction.

Various dispersants were tested for their effectiveness in producing a stable Kfo brine slurry containing manganomanganic oxide particles and/or ilmenite particles. Those tested included:

1) Lignosulphonate (Borresperse Na, Ultrazine Na from Borregaard Ligno Tech), a lignin based anionic dispersant with a wide variety of purities and molecular weights and its salt form. In addition to the negative charge (as an anionic dispersant), lignosulphonate, also exhibits a branched structure that provides steric stability;

2) Polyacrylate and polycarboxylate (Antiprex® SSC from BASF), a linear polyacrylic acid anionic type of dispersant. It exists in the form of a sodium or ammonium salt;

3) Modified polycarboxylate such as polyether polycarboxylate (Castament FS 20, Castament FS 40, Castament VP 95L, Melpers 0030, Melpers 3400, Melpers 5344, Melpers 9360 from BASF and Geropon T36 from Rhodia);

4) Copolymer of acrylic acid and vinyl phosphonic acid (Albritect CP30 from Rhodia)

5) Neutralized phosphonocarboxylic acid (Mirapol A400 from Rhodia)

6) Polyoxyethylenalkyd phosphate ester (Rhodafac RA600), a biodegradable linear alcohol ethoxylate phosphate ester.

7) Sulphonated naphthalene and melamine formaldehyde, commonly known as superplastisizer in the construction industry and widely used as dispersant in oil well cementing.

8) The group of co- or tri-polymers of acrylic acid and sulfonated monomers in acidic form or in salt form having an average molecular weight of less than 20000 g/mol. The sulfonated monomers can be either aliphatic or aromatic.

Most of these dispersants exhibit anionic character to increase the electrostatic repulsive forces between the particles which in turn provides a sufficient stabilization.

However, out of above 8 groups of dispersants investigated, only the dispersants in Group 8 produced a stable slurry.

The content of dispersant is preferably between 0.07 and 0.15 wt% based on the weight of the manganomanganic oxide particles and/or the ilmenite particles.

The invention also extends to a method of producing a stable non-settling KFo-based slurry of manganomanganic oxide particles and/or ilmenite particles, comprising: mixing together manganomanganic oxide particles and/or ilmenite particles, water and a dispersant, the dispersant representing 0.05 to 0.5 wt% based on the weight of the dry manganomanganic oxide particles and/or the dry ilmenite particles, the dispersant being selected from the group of co- or tri-polymers of acrylic acid and sulfonated monomers in acidic form or in salt form said dispersant having an average molecular weight of less than 20000 g/mol.

The amount of dispersant added is preferably between 0.07 and 0.15 wt% based on the weight of the manganomanganic oxide particles and/or the ilmenite particles.

The invention also extends to oil well drilling fluids which incorporate the slurry of the invention.

According to another aspect, there is provided a KFo brine based drilling fluid composition, comprising a slurry of KFo brine and manganomanganic oxide particles and/or ilmenite particles slurry according to the invention and optionally NaHCO$_3$ (sodium bicarbonate), CaCO$_3$ (calcium carbonate), a viscosifier, a dispersant and a fluid loss additive.

The invention also extends to methods of producing such products incorporating the manganomanganic oxide and ilmenite containing KFo-based slurry.

### Short Description of the Figures

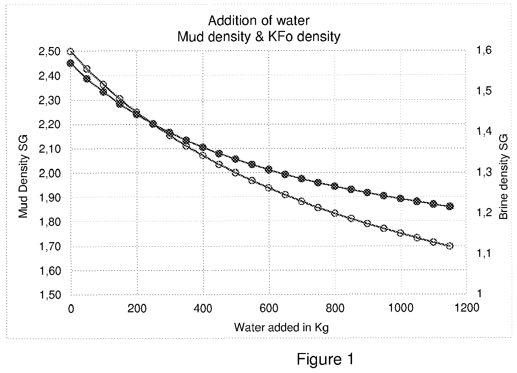

Figure 1 is a diagram showing the mud or drilling fluid and the KFo brine density as a function of the amount of water added to 1m$^3$ slurry according to the invention with density of 2.5SG.

### Description of Preferred Embodiments

The invention may be carried into practice in various ways and will now be illustrated in the following specific description and Examples.

Example 1 - KFo slurries containing manganomanganic oxide.

It was made five slurries, A to E containing 750 g KFo brine and respectively 250 g, 300 g 500 g 750 g and 930 g manganomanganic oxide particles. The density and viscosity of slurries A to E are shown in Table 2.

The viscosity is measured at a temperature of 20$^0$C using Fann 35 viscometer. The dial readings were recorded at viscometer speed of 600, 300, 200, 100, 6 and 3 rpm (revolutions per minute). The plastic viscosity (PV) and the yield point (YP) were calculated according to the equations:

$$PV\ (cP) = \theta_{600} - \theta_{300} \qquad \text{Equation 1}$$

$$YP\ (lb/100\ ft^2) = \theta_{300} - PV \qquad \text{Equation 2}$$

Where, $\theta_{600}$ and $\theta_{300}$ are the dial readings at 600 and 300 rpm, respectively.

Table 2

| Slurry | A | B | C | D | E |
|---|---|---|---|---|---|
| Density | 1,89 | 2 | 2,1 | 2,3 | 2,5 |
| 600 | 53 | 63 | 73 | 118 | 235 |
| 300 | 28 | 36 | 45 | 80 | 164 |
| 200 | 20 | 27 | 35 | 65 | 134 |
| 100 | 12 | 18 | 25 | 48 | 97 |
| 6 | 3 | 6 | 10 | 23 | 50 |
| 3 | 0 | 4 | 8 | 20 | 46 |
| PV | 25 | 27 | 28 | 38 | 71 |
| YP | 3 | 9 | 17 | 42 | 93 |

(continued)

| Slurry | A | B | C | D | E |
|--------|------|-----|------|------|-----|
| pH | 9,72 | 9,8 | 10,2 | 10,1 | 9,9 |

Slurries A to E did not contain a dispersant and it can be seen from Table 2 that the yield point for slurries D and E having the highest content of manganomanganic oxide is too high.

In order to show the effect of the dispersant concentration 5 g, 10 g and 15g of a copolymer of acrylic acid and a sulfonated monomer in acidic form having a molcular weight of 10 000 g/mol, was added to slurry E to provide slurries F, G, H and the viscosity was measured. The results are shown in Table 3.

Table 3

| Slurry | E | F | G | H |
|--------|------|------|------|------|
| 600 rpm | 235 | 175 | 162 | 155 |
| 300 rpm | 164 | 103 | 90 | 83 |
| 200 rpm | 134 | 78 | 63 | 57 |
| 100 rpm | 97 | 51 | 37 | 31 |
| 6 rpm | 50 | 21 | 11 | 6 |
| 3 rpm | 46 | 20 | 10 | 4 |
| PV (cp) | 71 | 72 | 72 | 72 |
| YP lb/ft2 | 93 | 31 | 18 | 11 |
| pH | 9,72 | 8,91 | 8,97 | 8,81 |

It is clearly seen from Table 3 that the dispersant reduces the interaction forces between the particles and disrupt the structural network and therefore the value of the YP declined with the increase of the amount of dispersant.

Example 2 Effect of viscosifier on the slurry viscosity

In order to investigate the effect of sepiolite and nano-fibrillated cellulose (NFC) as viscosifiers in KFo slurries containing managnomanganic oxide, four slurries I, J, K, L were made. Slurry I did not contain viscosifier, Slurry J contained sepiolite as viscosifier and slurries K and L contained different amounts of NFC as viscosifier. The composition of slurries I, J, K, and L are shown in Table 4. In addition, a standard silicone-based defoaming agent was added.

Table 4

| Slurry | I | J | K | L |
|--------|-------|-------|-------|-------|
| KFo brine | 750 g | 750 g | 750 g | 750 g |
| Dispersant | 10 g | 10 g | 10 g | 10 g |
| Sepiolite | 0 | 6 g | 0 | 0 |
| NFC | 0 | 0 | 0,57 g | 1,14 g |
| $Mn_3O_3$ | 1000 g | 1000 g | 1000 g | 1000 g |
| Defoamer | 1 g | 1 g | 1 g | 1 g |

The viscosity were measured for Slurries I, J, K, and L and the results are shown in Table 5.

Table 5

| Slurry | I | J | K | L |
|--------|-----|-----|-----|-----|
| Density | 2,5 | 2,5 | 2,5 | 2,5 |

(continued)

| Slurry | I | J | K | L |
|---|---|---|---|---|
| 600 rpm | 162 | 240 | 160 | 197 |
| 300 rpm | 90 | 130 | 92 | 119 |
| 200 rpm | 63 | 95 | 68 | 90 |
| 100 rpm | 37 | 55 | 42 | 58 |
| 6rrpm | 11 | 22 | 16 | 24 |
| 3 rpm | 10 | 20 | 15 | 23 |
| PV (cp) | 72 | 110 | 68 | 78 |
| YP (lb/ft2) | 18 | 20 | 24 | 41 |
| pH | 8,97 | 9,17 | 9,18 | 9,79 |

Example 3 Long term stability of KFo slurries containing manganomanganic oxide particles.

The stability of slurries E, H, J and L (see Examples 1 and 2) in terms of viscosity and settling was monitored over time. The slurries were kept in 1-liter containers under static condition at a room temperature of 20°C. As shown in Table 6 the viscosity of the slurries did not change significantly after a period of 3 months, indicating that the slurries are chemically and physically stable. It is to be expected that the viscosity will not change after longer time then as 6 months. Slurry E without dispersant and viscosifier was very thick and is expected to be difficult to pump. Slurries with dispersant and viscosifier such as J and L were more stable than slurry H without viscosifier. The free water on top of the slurries was less than 2ml for slurries with viscosifier. So slurries with dispersant and viscosifier are to be considered as stable. Gentle homogenization turns the stored slurry into flow-able, homogeneous and pump-able slurry.

Table 6: Stability test of slurry of $Mn_3O_4$ in KFo brine

| Slurry | E | | H | | J | | L | |
|---|---|---|---|---|---|---|---|---|
| Storage time | Fresh | After 3 months | Fresh | After 3 months | Fresh | After 3 months | Fresh | After 3 months |
| 600 | 235 | 237 | 155 | 175 | 240 | 223 | 197 | 211 |
| 300 | 164 | 161 | 83 | 91 | 130 | 132 | 119 | 122 |
| 200 | 134 | 131 | 57 | 62 | 95 | 87 | 90 | 89 |
| 100 | 97 | 95 | 31 | 33 | 55 | 47 | 58 | 52 |
| 6 | 50 | 45 | 6 | 5 | 22 | 11 | 24 | 12 |
| 3 | 46 | 40 | 4 | 4 | 20 | 10 | 23 | 9 |
| PV | 71 | 76 | 72 | 84 | 110 | 103 | 78 | 89 |
| YP | 93 | 85 | 11 | 7 | 20 | 17 | 41 | 33 |
| Free water | - | 4ml | - | 4ml | - | zero | - | 1.5ml |

Example 4 KFo slurry containing ilmenite

Ilmenite ($FeTiO_3$) is used as weight material for drilling fluids. Recently a new micronized ilmenite with an average particle size (D50) of 5$\mu$m has been developed to avoid the sag issue (Al-Bagoury & Steele, WO2013009187). In Table 7 it is shown composition in grams of three KFo slurries, slurry N containing manganomanganic oxide particles, Slurry O containing ilmenite particles and slurry P containing both manganomanganic oxide particles and ilmenite particles. The density of the slurries was 2.5kg/liter.

Table 7: Slurries with $Mn_3O_4$ and $FeTiO_3$ and a mixture of them.

| Slurry | N | O | P |
|---|---|---|---|
| KFo brine | 750 | 750 | 750 |
| Dispersant | 10 | 4 | 6 |
| $Mn_3O_4$ | 950 | 0 | 500 |
| Ilmenite ($FeTiO_3$) | 0 | 1040 | 530 |
| Defoamer | 1 | 1 | 1 |

The viscosity of slurries N, O and P was measured. The results are shown in Table 8.

Table 8: Viscosity of slurries of $Mn_3O_4$ and $FeTiO_3$ in KFo Brine.

| Slurry | N | O | P |
|---|---|---|---|
| 600 | 159 | 172 | 133 |
| 300 | 86 | 92 | 73 |
| 200 | 61 | 64 | 52 |
| 100 | 34 | 35 | 31 |
| 6 | 9 | 8 | 10 |
| 3 | 8 | 7 | 10 |
| PV | 73 | 80 | 60 |
| YP | 13 | 12 | 13 |
| pH | 10,5 | 8,83 | 8,6 |

Interestingly it can be seen from Table 8 that the plastic viscosity of slurry P, which is a slurry of mixture of $Mn_3O_4$ and $FeTiO_3$, is lowest. This is probably due to the wide particle distribution created by mixing the two materials.

Example 5 Drilling fluid test

In the following example the use of the slurry according to the present invention in drilling fluid will be illustrated. To formulate a drilling fluid with a density less than the slurry density (2.5SG), water needs to be added to obtain the desired density. The addition of water will reduce KFo concentration from its original density of 1.57SG in the slurry. Figure 1 show the effect of addition of water on the reduction of the KFo brine density. Assuming the desired drilling fluid density is 2SG, 500kg water has to be added to 1m3 $Mn_3O_4$/ KFo slurry. The density of KFo in this fluid be 1.35SG. It is still above the saturation point of KFo.

The equipment used for the drilling fluid test:

Fann 35 rheometer with thermo-cup, equipment for measuring fluid loss (HTHP), Silverson mixer, high pressure oven, heat aging cell, pH meter, mud balance for density measurement and precision balance.
Table 9 show the recipe of a conventional drilling fluid prepared and mixed by the conventional method. First, the fluid loss additives were mixed into water. Then a viscosifier was added. Afterwards the bridging agent, $CaCO_3$, was added. The dispersant was mixed for 2 min and finally the weight material, $Mn_3O_4$, was mixed for 60min.

Table 9: Recipe of 1.9 SG HPHT drilling fluid prepared by the conventional method.

| Additives in order of addition | Mixing Time | Cone in gram |
|---|---|---|
| Water | | 160 |
| KFo brine S G 1.57 | 1 | 308 |
| HPHT synthetic fluid loss additive | 10 | 10 |

(continued)

| Additives in order of addition | Mixing Time | Cone in gram |
|---|---|---|
| Clay viscosifier | 10 | 6 |
| Anionic cellulose as fluid loss additive | 10 | 7 |
| HPHT dispersant | 5 | 5,22 |
| CaCO3 medium (25$\mu$m) | 5 | 10 |
| CaCO3 large (50$\mu$m) | 5 | 5 |
| $Mn_3O_4$ | 60 | 392 |
| Defoamer | 2 | 1 |
| *) the mixing speed was 6000rpm. | | |

Table 10 show the recipe and mixing of a drilling fluid according the present invention. First, the fluid loss additives were mixed into water or mixed directly into the slurry. Then a viscosifier was added. Afterward the bridging agent, CaCO3, was added. The dispersant and defoamer were finally mixed for 3 min. As shown in tables 9 and 10 the total mixing time for the fluid according to the present invention is considerably shorter than the conventional method.

Table 10: Recipe of 1.9 SG HPHT drilling fluid prepared by the present invention method.

| Additives in order of addition | Mixing Time | Cone in gram |
|---|---|---|
| Water | | 160 |
| HPHT synthetic fluid loss additive | 10 | 10 |
| $Mn_3O_4$ slurry in KFo brine | 30 | 700 |
| Clay viscosifier | 10 | 6 |
| Anionic cellulose as fluid loss additive | 10 | 7 |
| CaCO3 medium (25$\mu$m) | 5 | 10 |
| CaCO3 large (50$\mu$m) | 5 | 5 |
| HPHT dispersant | 5 | 2 |
| Defoamer | 2 | 1 |

Table 11 shows the properties of drilling fluids prepared by the conventional and method of the present invention before and after heat ageing for 16h at 175°C. The analysis of the two fluids is similar.

Table 11: Analysis of drilling fluids

| | Conventional method | | MaxForm additive | |
|---|---|---|---|---|
| Heat Aged at 175°C | BHR | AHR 16 Hrs | BHR | AHR 16 Hrs |
| Fann viscosity | | | | |
| 600 rpm | 85 | 61 | 87 | 64 |
| 300 rpm | 46 | 40 | 58 | 39 |
| 200 rpm | 30 | 28 | 35 | 28 |
| 100 rpm | 20 | 16 | 20 | 17 |
| 6 rpm | 4 | 4 | 4 | 5 |
| 3 rpm | 3 | 4 | 3 | 4 |
| PV @ 50°C, cp | 39 | 21 | 29 | 25 |
| YP, lb/100ft$^2$ | 7 | 19 | 29 | 14 |

(continued)

| Heat Aged at 175°C | Conventional method | | MaxForm additive | |
|---|---|---|---|---|
| | BHR | AHR 16 Hrs | BHR | AHR 16 Hrs |
| Fann viscosity | | | | |
| 10 see Gel, lb/100ft$^2$ | 4 | 4 | 4 | 4 |
| 10 m in Gel, lb/100ft$^2$ | 5 | 10 | 16 | 25 |
| Filteration | | | | |
| HPHT fluid loss at 175°C | 15 | 15 | 14 | 16 |
| Filtercake (mm) | <1 | <1 | <1 | <1 |
| pH | 9,35 | 10,43 | 9,5 | 10,25 |
| Density gm/ml | 1,9 | 1,89 | 1,91 | 1,9 |
| Static Sag | | | | |
| Supernantant liquid ( ml ) | | 6 | | 4,5 |
| Sag Factor | | 0,506 | | 0,506 |

It was found that the nano-fibrillated cellulose is a thermally stable and effective viscosifier for the formate brines with and without the addition of $Mn_3O_4$. The example below (Table 12 and 13) show a stable drilling fluid that was heat aged for 16h at temperature of 190°C. The viscosity parameters such as the yield point or the 10s and 10min gels remained constant after the dynamic heat aging for 16h at 190°C. The fluid loss measured at 175°C is in the acceptable range (<15ml).

Table 12: Recipe of 1.7 SG HPHT drilling fluid prepared with using NFC as a viscosifier.

| Additives in order of addition | Mixing Time | Conc in gram |
|---|---|---|
| $Mn_3O_4$ / KFo slurry (1.71SG) | | 1042 |
| HPHT synthetic fluid loss additive | 10 | 12 |
| NFC viscosifier | 10 | 1,37 |
| Anionic cellulose as fluid loss additive | 10 | 8,4 |
| HPHT dispersant | 5 | 6 |
| CaCO3 medium (25$\mu$m) | 5 | 12 |
| CaCO3 large (50$\mu$m) | 5 | 6 |
| Defoamer | 5 | 1 |

Table 13: Analysis of the 1.7SG drilling fluid before and after heat aging at 190°C under dynamic condition.

| Heat aged at 190°C | BHR | AHR 16 Hrs |
|---|---|---|
| Fann viscosity | | |
| 600 rpm | 63 | 56 |
| 300 rpm | 39 | 36 |
| 200 rpm | 30 | 27 |
| 100 rpm | 20 | 18 |
| 6 rpm | 6 | 6 |
| 3 rpm | 5 | 5 |
| PV @ 50°C, cp | 24 | 20 |

(continued)

| Heat aged at 190°C | BHR | AHR 16 Hrs |
|---|---|---|
| Fann viscosity | | |
| YP, lb/100ft$^2$ | 15 | 16 |
| 10 see Gel, lb/100ft$^2$ | 5 | 5 |
| 10 min Gel, lb/100ft$^2$ | 8 | 7 |
| Filteration | | |
| HPHT fluid loss at 175°C | 14 | 10 |
| Filtercake (mm) | <1 | <1 |
| pH | 9,75 | 10,25 |
| Density gm/ml | 1,7 | 1,69 |

Based on the illustrated examples above the following conclusion can be made;

- High solid and stable slurries of $Mn_3O_4$ or $FeTiO_3$ a combination of both in KFo brine are produced.
- The density of such slurries can be as high as 3SG but is preferably to be in the range 2-2.5SG.
- Dispersant and/or viscosifier are used to stabilize the slurry.
- The stabilizers need to be compatible with the high salinity of KFo brine.
- The stabilizers sepiolite and nano-fibrilated cellulose are compatible with the chemicals used in drilling fluid formulation such as fluid loss additives, viscosifier, etc..
- The stabilizers are thermally stable, since such slurry may be used The content of the nano-fibrillated cellulose is less that 5wt% based on the weight of dry manganomanganic oxide particles. More, the drilling fluid prepared with this slurry additive is easy to mix and show good stability.
- The drilling fluid prepared with this slurry additive according to the present invention can be used to drill oil well with a bottom-hole temperature up to 260°C (500°F).

## Claims

1. A stable non-settling slurry of potassium formate (KFo) brine and manganomanganic oxide particles having a particle size below 10 $\mu$m and/or ilmenite particles having an average particle size below 15 $\mu$m, **characterized in that** the slurry contains 0.05 to 0.5 wt% of a salt tolerant dispersant based on the weight of dry manganomanganic oxide particles and/or the ilmenite particles, the dispersant being co- or tri-polymers of acrylic acid and sulfonated monomers in acidic form or in salt form, said dispersant having an average molecular weight of less than 20000 g/mol.

2. A slurry as claimed in Claim 1, in which the content of dispersant is between 0.07 and 0.15 % based on the weight of the manganomanganic oxide particles and/or the ilmenite particles.

3. A slurry as claimed in Claim 1 - 2, in which the slurry additionally contains sepiolite as a viscosifier.

4. A slurry as claimed in Claim 1 - 3, in which the slurry additionally contains nano-fibrillated cellulose as a viscosifier.

5. A method of producing a stable, non-settling potassium formate (KFo) - based slurry of manganomanganic oxide particles and/or ilmenite particles, **characteri zed in** mixing together manganomanganic oxide particles and/or ilmenite particles, potassium formate (KFo) brine and a dispersant, the dispersant representing 0.05 to 0.5 wt% based on the weight of the dry manganomanganic oxide particles and/or the dry ilmenite particles, the dispersant being co- or tri-polymers of acrylic acid and sulfonated monomers in acidic form or in salt form said dispersant having an average molecular weight of less than 20000 g/mol.

6. A method as claimed in Claim 5, wherein the amount of dispersant added is between 0.07 and 0.15 % based on the weight of the manganomanganic oxide particles and/or the ilmenite particles.

7. A method as claimed in Claim 5 or 6, in which the slurry additionally contains sepiolite as a viscosifier.

8. A method as claimed in Claim 5 or 6, in which the slurry additionally contains nano-fibrillated cellulose as a viscosifier.

9. A slurry as claimed in any of Claims 1 to 4, optionally comprising $NaHCO_3$ (sodium bicarbonate), $CaCO_3$ (calcium carbonate), a viscosifier, and a fluid loss additive, for use as a drilling fluid composition.

## Patentansprüche

1. Stabile, sich nicht absetzende Aufschlämmung von Kaliumformat (KFo) -Salzlösung und manganomanganischen Oxidpartikeln mit einer Partikelgröße unterhalb 10 $\mu$m und/oder Ilmenitpartikeln mit einer durchschnittlichen Partikelgröße unterhalb 15 $\mu$m, **dadurch gekennzeichnet, dass** die Aufschlämmung 0,05 bis 0,5 Gewichtsprozent eines salztoleranten Dispergiermittels enthält basierend auf dem Gewicht von trockenen manganomanganischen Oxidpartikeln und/oder den Ilmenitpartikeln, indem das Dispergiermittel Co- oder Tri-Polymere von Acrylsäure und sulfonierte Monomere in Säureform oder in Salzform ist, indem das Dispergiermittel ein durchschnittliches Molekulargewicht von weniger als 20000 g/Mol hat.

2. Aufschlämmung nach Anspruch 1, worin das Dispergiermittelgehalt zwischen 0,07 und 0,15 % ist basierend auf dem Gewicht der manganomanganischen Oxidpartikel und/oder der Ilmenitpartikel.

3. Aufschlämmung nach Anspruch 1 - 2, worin die Aufschlämmung zusätzlich Sepiolit als ein Verdickungsmittel enthält.

4. Aufschlämmung nach Anspruch 1 - 3, worin die Aufschlämmung zusätzlich nanofibrilierte Zellulose als ein Verdickungsmittel enthält.

5. Verfahren zur Erzeugung einer stabilen, sich nicht absetzenden Aufschlämmung, basiert auf Kaliumformat (KFo), von manganomanganischen Oxidpartikeln und/oder Ilmenitpartikeln, **gekennzeichnet durch** ein Zusammenmischen von manganomanganischen Oxidpartikeln und/oder Ilmenitpartikeln, Kaliumformat (KFo) -Salzlösung und einem Dispergiermittel, indem das Dispergiermittel 0,05 bis 0,5 Gewichtsprozent basierend auf dem Gewicht der trockenen manganomanganischen Oxidpartikel und/oder der trockenen Ilmenitpartikel darstellt, indem das Dispergiermittel Co- oder Tri-Polymere von Acrylsäure und sulfonierte Monomere in Säureform oder in Salzform ist, indem das Dispergiermittel ein durchschnittliches Molekulargewicht von weniger als 20000 g/Mol hat.

6. Verfahren nach Anspruch 5, worin die Menge von zugesetztem Dispergiermittel zwischen 0,07 und 0,15 % ist basierend auf dem Gewicht der manganomanganischen Oxidpartikel und/oder der Ilmenitpartikel.

7. Verfahren nach Anspruch 5 oder 6, worin die Aufschlämmung zusätzlich Sepiolit als ein Verdickungsmittel enthält.

8. Verfahren nach Anspruch 5 oder 6, worin die Aufschlämmung zusätzlich nanofibrilierte Zellulose als ein Verdickungsmittel enthält.

9. Aufschlämmung nach einem der Ansprüche 1 bis 4, eventuell umfassend $NaHCO_3$ (Natriumbicarbonat), $CaCO_3$ (Kalziumcarbonat), ein Verdickungsmittel und ein Flüssigkeitsverlustzusatzstoff, zur Verwendung als eine Bohrfluidzusammensetzung.

## Revendications

1. Bouillie stable non sédimentaire de formiate de potassium (KFo) saumure et de particules d'oxyde manganomanganique ayant une taille de particule inférieure à 10 $\mu$m et / ou des particules d'ilménite ayant une taille de particule moyenne inférieure à 15 $\mu$m, **caractérisée en ce que** la bouillie contient 0,05 à 0,5% en poids d'un dispersant tolérant au sel sur la base du poids de particules d'oxyde manganomanganique sèches et / ou des particules d'ilménite, le dispersant étant co- ou tri-polymères d'acide acrylique et de monomères sulfonés sous forme acide ou sous forme de sel, ledit dispersant ayant un poids moléculaire moyen inférieur à 20000 g/mol.

2. Bouillie selon la revendication 1, dans laquelle la teneur en dispersant est comprise entre 0,07 et 0,15% sur la base du poids des particules d'oxyde manganomanganique et / ou des particules d'ilménite.

**3.** Bouillie selon les revendications 1 à 2, dans laquelle la bouillie contient en outre de la sépiolite en tant qu'agent viscosifiant.

**4.** Bouillie selon les revendications 1 à 3, dans laquelle la bouillie contient en outre de la cellulose nanofibrillée en tant qu'agent viscosifiant.

**5.** Procédé de production d'une bouillie stable non sédimentaire à base de formiate de potassium (KFo) de particules d'oxyde manganomanganique et / ou de particules d'ilménite, **caractérisé par** le mélange de particules d'oxyde manganomanganique et / ou de particules d'ilménite, de formiate de potassium (KFo) saumure et d'un dispersant, le dispersant représentant 0,05 à 0,5% en poids sur la base du poids des particules d'oxyde manganomanganique sèches et / ou des particules d'ilménite sèches, le dispersant étant co- ou tri-polymères d'acide acrylique et de monomères sulfonés sous forme acide ou sous forme de sel, ledit dispersant ayant un poids moléculaire moyen inférieur à 20000 g/mol.

**6.** Procédé selon la revendication 5, dans lequel la quantité de dispersant ajoutée est comprise entre 0,07 et 0,15% sur la base du poids des particules d'oxyde manganomanganique et / ou des particules d'ilménite.

**7.** Procédé selon la revendication 5 ou 6, dans lequel la bouillie contient en outre de la sépiolite en tant qu'agent viscosifiant.

**8.** Procédé selon la revendication 5 ou 6, dans lequel la bouillie contient en outre de la cellulose nanofibrillée en tant qu'agent viscosifiant.

**9.** Bouillie selon l'une quelconque des revendications 1 à 4, comprenant éventuellement $NaHCO_3$ (bicarbonate de sodium), $CaCO_3$ (carbonate de calcium), un agent viscosifiant et un additif de perte de fluide, destinée à être utilisée en tant que composition de fluide de forage.

Figure 1

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

## Patent documents cited in the description

- US 5007480 A
- WO 2012036560 A
- WO 2013009187 A1
- WO 2013009187 A, Al-Bagoury & Steele

## Non-patent literature cited in the description

- **AL-BAGOURY ; STEELE.** *AADE Fluids Technical Conference and Exhibition, Houston, Texas,* 2014